# EUROPEAN PATENT APPLICATION

(11) **EP 1 674 853 A1**
(43) Date of publication of application: **28.06.2006**
(21) Application number: 05257034.8
(22) Date of filing: 15.11.2005
(51) Int. Cl.: G01N 21/47, G01N 21/86, G01N 33/53

(54) **A method of reading an assay using low resolution detection**

(30) Priority: 23.12.2004 US 19183
(71) Applicant: Agilent Technologies, Inc., Palo Alto, CA 94306 (US)
(72) Inventor: Robrish, Peter Ronald, San Francisco CA 94117 (US); Sampas, Nicholas M., San Jose CA 95125 (US); Hardcastle, Ian, Sunnyvale CA 94087 (US)
(74) Representative: Exell, Jonathan Mark

(57) **Abstract**

A method of reading an assay includes illuminating a substrate (100). The substrate includes a sensitive region (102). The method also includes detecting whether the substrate (100) was exposed to an analyte of interest. The detecting includes using low resolution detection and *a priori* data about the sensitive region (102) to determine whether a characteristic of a first portion of the illumination returned from the sensitive region (102) differs from a characteristic of a second portion of the illumination returned from the substrate outside the sensitive region (103).

## Description

### BACKGROUND OF THE INVENTION

### Description of the Related Art

Currently, assays are read by human eye or high cost imaging systems, and the results of such reading of assays are determined by individual human judgment or expensive equipment.

A purpose of reading these assays is to determine whether a sample of biological or chemical material being assayed includes a particular analyte, or a derivative or constituent of the analyte. The particular analyte which is the subject of the assay is referred to as an analyte of interest. The sample may include biological material such as urine, saliva, blood plasma, or the like. The sample may include chemical material such as rainwater, sludge, or the like.

An assay is performed using a substrate having a sensitive region patterned on the surface of a substrate. Such substrates are known in the art, and the sensitive region is formed by a chemical treatment or a physical manipulation of the surface. The pattern of the sensitive region includes one or more shapes, for example, a circular shape with a diameter of approximately one centimeter (cm.).

The substrate is typically made of silicon or glass and has a smooth surface. The surface of the substrate includes a sensitive region which reacts to exposure to an analyte of interest. The sensitive region is indistinguishable from the substrate outside the sensitive region, until the sensitive region is exposed to the analyte of interest. The sensitive region will react to exposure of the sensitive region to the analyte of interest or to a derivative of the analyte of interest, such as by bonding to the analyte of interest.

Detection of such a reaction of the sensitive region upon exposure to the analyte of interest is required to be performed by human eye or high cost, high resolution detection systems, which determine the shape of the sensitive region upon exposure to the analyte of interest.

In the related art, the human observes the sensitive region to determine whether there has been a sufficient change in the appearance of the sensitive region relative to the change in appearance of the rest of the substrate resulting from exposure to the sample to conclude that the sensitive region was exposed to the analyte of interest, and thus, that the analyte of interest was included in the sample.

Determining by human beings whether the analyte of interest is detected may not be consistent and may be prone to error.

Determining by systems of the related art, which are typically charge-coupled device (CCD-based) systems and some CMOS-based systems, is expensive in that these systems are high-resolution systems which determine, across the entire substrate, the shape and location of the sensitive region exposed to the analyte of interest on the surface of the substrate. However, such detailed determination is unnecessary.

Statistical pattern recognition is known in the art. Statistical pattern recognition is discussed in "Statistical Pattern Recognition: A Review," Anil K. Jain, Robert P.W. Duin, and Jianchang Mao, IEEE Transactions on Pattern Analysis and Machine Intelligence, Vol. 22, No. 1, pp. 4-37, January 2000, the contents of which arein corporated herein by reference.

A problem with the related art is that chemical or biological analytes cannot be detected in an inexpensive and consistent way.

### SUMMARY OF THE INVENTION

It is an aspect of the present invention to provide lower cost assay readouts.

It is another aspect of the present invention to read multiple analytes in a single assay.

It is a further aspect of the present invention to provide results of reading assays which are more predictable and consistent than in the related art.

The above aspects are attained by a method of reading an assay including illuminating a substrate. The substrate includes a sensitive region. The method also includes detecting whether the substrate was exposed to an analyte of interest. The detecting includes using a a low resolution detector and a *priori* data about the sensitive region to determine whether a characteristic of a first portion of the illumination returned from the sensitive region differs from a characteristic of a second portion of the illumination returned from the substrate outside the sensitive region.

The above aspects are also attained by an apparatus for reading an assay of a sample deposited on a substrate having a sensitive region to determine whether an analyte of interest was included in the sample. The apparatus includes an illuminator arranged to illuminate the substrate, a low resolution detector arranged to detect illumination returned from the substrate, and an analyzer coupled to the low resolution detector and operating in response to *a priori* data about the sensitive region to determine whether the substrate was exposed to the analyte of interest by analyzing the detected illumination to determine whether a characteristic of a first portion of the illumination returned from the sensitive region differs from a characteristic of a second portion of the illumination returned from the substrate outside the sensitive region.

The above aspects are further attained by a method of reading an assay. The method includes illuminating a substrate, the substrate including sensitive regions. The method also includes detecting whether the substrate was exposed to analytes of interest, the detecting including using low resolution detection and a *priori* data about the sensitive regions to determine whether one or both of a characteristic of a first portion of the illumination returned from one of the sensitive regions and a characteristic of a second portion of the illumination returned from another of the sensitive regions differs from a characteristic of a third portion of the illumination returned from the substrate outside the sensitive regions.

In addition, the above aspects are attained by an apparatus for reading an assay of a sample deposited on a substrate having sensitive regions to determine whether a respective analyte of interest was included in the sample. The apparatus includes an illuminator arranged to illuminate the substrate, a low resolution detector arranged to detect illumination returned from the substrate and comprising an array of detectors, and an analyzer coupled to the low resolution detector and operating in response to a *priori* data about the sensitive regions to determine whether at least one of the sensitive regions was exposed to the analyte of interest by analyzing the detected characteristics to determine whether one or both of a characteristic of a first portion of the illumination returned from one of the sensitive regions and a characteristic of a second portion of the illumination returned from another of the sensitive regions differs from a characteristic of a third portion of the illumination returned from the substrate outside the sensitive regions.

Further, the above aspects are attained by an apparatus for reading an assay of a sample deposited on a substrate having a sensitive region to determine whether an analyte of interest was included in the sample. The apparatus includes an illuminator arranged to illuminate the substrate, a low resolution detector arranged to detect illumination returned from the substrate, and a processor coupled to the low resolution detector and operating in response to a *priori* data about the sensitive region to determine whether the substrate was exposed to the analyte of interest by executing a statistical pattern recognition function to analyze the detected illumination to determine whether a characteristic of a first portion of the illumination returned from the sensitive region differs from a characteristic of a second portion of the illumination returned from the substrate outside the sensitive region.

These together with other aspects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Figures 1 A and 1 B are diagrams showing a sensitive region on a substrate before and after exposure to an analyte.

Figure 2 is a diagram showing an apparatus for reading an assay of a sample deposited at a sensitive region on a substrate, of the present invention.

Figures 3A, 3B, 3C, 3D, 3E, 3F, 3G, 3H, and 31 are diagrams showing substrates and detector responses, in accordance with the present invention.

Figure 4 is a diagram showing exposed samples and corresponding low resolution images.

Figure 5 is a diagram showing an apparatus for reading an assay of a sample deposited at a sensitive region on a substrate, including a linear imaging array, of the present invention.

Figure 6 is a diagram showing an exposed sample and a corresponding time dependent low resolution image on a linear array, of the present invention.

Figure 7 is a flowchart of a method of reading an assay of a substrate exposed to an analyte using low resolution imaging, according to the present invention.

Figure 8 is a flowchart of another method of reading an assay of a substrate exposed to analytes using low resolution imaging, according to the present invention.

### DETAILED DESCRIPTION OF THE PREFERRED EMBODIMENTS

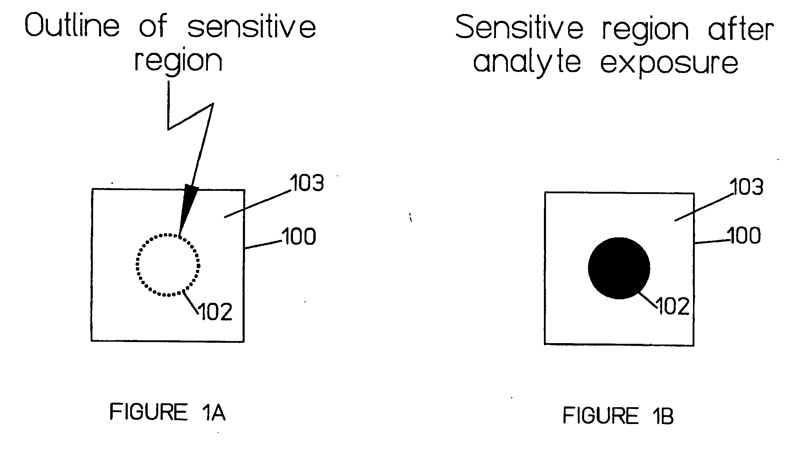

Figures 1 A and 1 B are diagrams showing a substrate 100 having a sensitive region 102 deposited on the substrate 100. The substrate 100 may also be a test strip with a sensitive region 102.

Figure 1A shows the sensitive region 102 prior to exposure of the sensitive region 102 to a sample having the analyte of interest, and Figure 1B shows the sensitive region 102 after exposure of the sensitive region 102 to the sample having the analyte of interest.

As shown in Figure 1A, prior to exposure of the surface of the substrate 100 to a sample having the analyte of interest and upon illumination of the surface of the substrate 100, a portion of the illumination returned from the sensitive region 102 has the same characteristics as a portion of the illumination returned from a substrate outside the sensitive region 103 of the substrate 100.

In addition, and also as shown in Figure 1A, subsequent to exposure of the surface of the substrate 100 to a sample without the presence of the analyte of interest, a portion of the illumination returned from the sensitive region 102 has the same characteristics as a portion of the illumination returned from the substrate outside the sensitive region 103. That is, exposure of the surface of the substrate 100 to the sample without the presence of the analyte of interest does not cause a change in the characteristic of the illumination returned from the sensitive region 102 compared to the characteristic of the illumination returned from the substrate outside the sensitive region 103.

As shown in Figure 1 B, exposure of the sensitive region 102 to a sample having the analyte of interest will cause a change in the characteristics of the portion of the illumination returned from the sensitive region 102. This change in the characteristics of the portion of the illumination returned from the sensitive region 102 is detectable by a low resolution detector of the present invention, as explained herein below.

That is, there are no detectable differences between the characteristics of portions of illumination returned from the sensitive region 102 and the substrate outside the sensitive region 103 prior to exposure of the substrate to a sample, the characteristics of the portions of the illumination returned from the sensitive region 102 and the substrate outside the sensitive region 103 subsequent to exposure of the substrate to a sample without the analyte of interest, and the characteristics of the illumination returned from the substrate outside the sensitive region 103 subsequent to exposure to the analyte of interest, but there is a detectable difference between any of the foregoing characteristics and the illumination returned from the sensitive region 102 subsequent to exposure of the sensitive region 102 to the analyte of interest.

The surface of the substrate 100 has texture, and that texture is not limited to being smooth; that is, the texture could be rough. Moreover, exposure of the surface of the substrate 100 to the sample could change the characteristic of illumination returned from the substrate 100, with or without the presence of the analyte of interest in the sample. That is, the sample could form a coating on the surface of the substrate 100 such that the characteristic of the first portion of illumination returned from the sensitive region 102 and the characteristic of the second portion of the illumination returned from the substrate outside the sensitive region 100 could both change in response to exposure to the sample. If there is a detectable difference in the characteristic of the portion of illumination returned from the sensitive region 102 compared to the characteristic of the portion of illumination returned from the substrate outside the sensitive region 103, then the present invention determines that the sensitive region 102 was exposed to the analyte of interest, and thus, that the analyte of interest was included in the sample. If there is no detectable difference in the foregoing characteristics, then the present invention determines that the sensitive region 102 was not exposed to the analyte of interest, and thus, that the analyte of interest was not included in the sample.

Thus, there is a difference between the characteristics of the portion of the illumination returned from the sensitive region 102 upon exposure to the analyte of interest, and the characteristics of the portion of the illumination returned from the substrate outside the sensitive region 103 upon exposure to the analyte of interest, and this difference is detectable by a low resolution detector of the present invention.

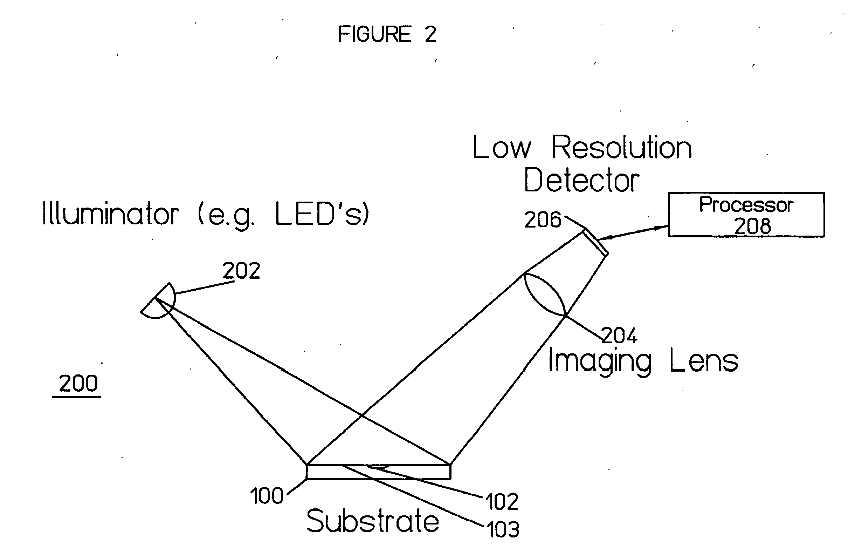

Figure 2 is a diagram showing an embodiment of a low resolution imaging apparatus 200 for reading an assay of a sample deposited in a substrate 100, of the present invention.

That is, Figure 2 is a diagram showing a low resolution imaging apparatus 200 for reading an assay of a sample deposited on a substrate 100 having a sensitive region 102 to determine whether an analyte of interest was included in the sample. The low resolution imaging apparatus 200 includes an illuminator 202, a low resolution detector 206, and an analyzer 208. In the low resolution imaging apparatus 200 of Figure 2, the analyzer 208 is a processor. In further embodiments of the present invention, the analyzer could be a digital signal processor, dedicated computer hardware, or simple electronic circuits.

Referring again to Figure 2, the illuminator 202 is arranged to illuminate the substrate 100. The low resolution detector 206 is arranged to detect illumination returned from the substrate 100. The analyzer 208 is coupled to the low resolution detector 206 and operates in response to *a priori* data about the sensitive region 102 to determine whether the substrate 100 was exposed to the analyte of interest by analyzing the detected illumination to determine whether a characteristic of a first portion of the illumination returned from the sensitive region 102 differs from a characteristic of a second portion of the illumination returned from the substrate outside the sensitive region 103. If there is more than one sensitive region 102 included on the substrate, then the present invention operates in response to *a priori* data about the sensitive regions 102.

Once the sample has been deposited on the substrate 100, the low resolution imaging apparatus 200 of the present invention illuminates the substrate 100 by the illuminator 202. The illuminator 202 includes a source of radiation arranged to impinge upon the substrate 100, such as visible, infrared, ultraviolet, or microwave radiation from light emitting diodes, ambient light, a light bulb, a microwave source, or the like. The present invention is not limited to detecting visible light, but detects illumination at least of the kinds listed above, as well.

Optionally, a lens (not shown in Figure 2) is used to focus the illumination from the illuminator 202 to the substrate 100.

Once the substrate 100 has been illuminated by the illuminator 202, characteristics of illumination returned from the substrate 100 are detected by low resolution detector 206. The characteristics of illumination returned from the substrate 100 include characteristics of illumination returned from various locations on the substrate, including the sensitive regions of the substrate, and the substrate outside the sensitive regions of the substrate.

Optionally, an imaging lens 204 is used to direct the illumination returned from the substrate 100 to the low resolution detector 206.

The characteristics of the illumination returned from the substrate 100 to the low resolution detector 206, and the characteristics of the portions of the illumination returned from various locations of the substrate 100 to the low resolution detector 206, include, for example, spectral intensity, power, polarization, or fluorescence, or the like, or combinations thereof. Other useful information, such as images, individual pixel values, and albedo, may be determined from these characteristics. The various locations of the substrate 100 may include the sensitive regions 102 and the substrate outside the sensitive region 103 and the edges between the sensitive regions 102 and the substrate outside the sensitive regions 103. Differences between the characteristics of the illumination returned from the various locations of the substrate 100 to the low resolution detector 206 are detectable by the low resolution detector 206.

The low resolution detector 206 of the present invention detects characteristics of the illumination returned from the substrate 100 and, more particularly, whether there is a difference between the characteristics of a first portion of the illumination returned from a sensitive region 102 of the substrate and a second portion of the illumination returned from a substrate outside the sensitive region 103 of the substrate, and, optionally, the edges therebetween.

In the present invention, low resolution detection is detecting a first portion of illumination returned from a sensitive region 102, and a second portion of illumination returned from a substrate outside of the sensitive region 103, and, optionally includes detecting a combination of the first portion of the illumination and the second portion of the illumination. Low resolution detection of the present invention is performed by the low resolution detector 206.

The combination of the first portion of the illumination and the second portion of the illumination is the sum of the amount of the first portion of the illumination and the amount of the second portion of the illumination.

The low resolution detector 206 includes a minimum number of detector elements, such as pixels, able to determine whether there is a difference between the characteristics of the portion of the illumination returned from the sensitive region 102 and the characteristics of portion of the illumination returned from the substrate outside the sensitive region 103, and, optionally, the edges therebetween.

In low resolution detection of the present invention, the low resolution detector 206 of the present invention distinguishes between the characteristics of the portion of the illumination returned from the sensitive region 102 and the characteristics of the portion of illumination returned from the substrate outside the sensitive region 103. To distinguish between the characteristic of the portion of illumination returned from the sensitive region and the characteristic of the portion of illumination returned from the substrate outside the sensitive region 103, in one embodiment of the present invention, the low resolution detector 206 includes at least one detector element in which the substrate 100 is moving if the low resolution detector 206 operates to receive at least two detections of illumination returned from different parts of the substrate 100, and in another embodiment of the present invention, the low resolution detector 206 includes at least two detector elements in which is substrate 100 is stationary if the low resolution detector operates to receive detections of illumination returned from different parts of the substrate 100.

The low resolution detector 206 of the present invention may include an optical detector with one detector element, if the substrate 100 is moving and more than one detection is made with the one detector element from different locations of the substrate 100, an optical detector with two or more detector elements, an optical detector with a one dimensional linear array of detector elements corresponding to pixels, an optical detector with an array of detector elements corresponding to pixels such as a 1 dimensional (1 D) array or a 2 dimensional (2D) array, or combinations thereof. The low resolution detector 206 may include CMOS (complementary metal-oxide-silicon) detectors.

The present invention is not limited to the above-mentioned embodiments of low resolution detector 206. In other embodiments of the present invention, low resolution detector 206 may also include a low resolution camera such as a webcam or cellular telephone camera , or imaging systems, so long as the low resolution camera or imaging system performs low resolution detection in the manner of the present invention in which a minimum number of pixels, that is, two or more pixels if the substrate 100 is stationary and one pixel if the substrate 100 is moving and more than one detection is made by the one pixel at different locations on the substrate 100, are used to detect a characteristic of a first portion and a characteristic of a second portion of illumination, without analyzing all pixels values included in the low resolution camera or the imaging system.

The present invention operates in response to a *priori* data, examples of which include illumination intensity of the substrate 100, color, the relative albedo of the sensitive region 102 due to exposure to the analyte of interest, position of the detectors of the low resolution detector 206, size of the sensitive region 102, location of the sensitive region 102, and/or shape of the sensitive region 102, threshold value of the difference between the characteristic of the first portion of the illumination returned from the sensitive region of the substrate and the characteristic of the second portion of the illumination returned from the substrate outside the sensitive region 103, or the like.

The use of two optical detectors, a linear imaging array of pixels, and a one dimensional imaging array of pixels, and two dimensional imaging array of pixels, as embodiments of the low resolution detector 206 of the present invention is now discussed.

In an embodiment of the present invention, determination of the differences between the characteristic of a first portion of illumination returned from a sensitive region 102 and the characteristic of a second portion of illumination returned from the substrate outside the sensitive region 103 is performed using a minimum of two detectors, such as optical detectors. An example of *a priori* data related to this determination includes knowledge of the sensitive region 102 and the location of one detector corresponding to a location inside of the sensitive region and another detector corresponding to a location of the substrate outside the sensitive region 103. Other a *priori* data includes color, and/or albedo of the sensitive region 102 and the substrate outside the sensitive region 103. The differences are determined using the a *priori* data about the sensitive region 102.

For example, in this embodiment of the low resolution imaging apparatus 200 present invention, the sensitive region 102 of the substrate 100 lighter or darker in appearance than the substrate outside the sensitive region 103 when the substrate 100 is exposed to the analyte of interest. That is, the albedo of the sensitive region 102 is changed upon exposure of the sensitive region 102 to the analyte of interest, relative to the albedo of the non-sensitive area 103.

Also in an embodiment of the present invention, determination of whether detected characteristics of illumination returned from substrate 100 are consistent with a particular shape of the sensitive region 102 is performed using a minimum of 3 detectors if the substrate is stationary when the detectors are detecting illumination returned from the substrate, or one detector if a minimum of 3 detections of illumination returned from different parts of the substrate 100 are received by the one detector if the substrate 100 is moving. In an embodiment of the present invention, these detectors are optical detectors.

Throughout the following discussion, patterns include one or more shapes, and a pattern is a group of shapes.

The following example is the use of a minimum of 3 detectors. An example of a *priori* data related to this determination of whether the returned, detected illumination is consistent with a particular shape would include the above-mentioned *a priori* data, as well as the location of the third detector relative to the sensitive region 102, as well as the illumination intensity, color, and/or the relative albedo of the sensitive region 102 due to exposure of the analyte of interest corresponding thereto. If, for example, 5 optical detectors positioned at locations extended across the center of the sensitive region and into the substrate outside the sensitive region 103 are used as the low resolution detector 206, then the locations and corresponding a *priori* data about these 5 optical detectors are also used to make a statistical determination as to whether the sensitive region 102 has changed in characteristics of illumination returned from a portion of the pixels and was thus exposed to the analyte of interest.

In addition, in an embodiment of the present invention, an optical detector having a one dimensional array of pixels is used as the low resolution detector 206, with the substrate 100 moving relative to the low resolution optical detector 206 while portions of illumination are returned from the sensitive region 102 and the substrate outside the sensitive region 103. In this embodiment of the present invention, the a *priori* data includes the above-mentioned a *priori* data as well as the position of the substrate 100 as the substrate 100 moves past a fixed point or is scanned by the low resolution detector 206 as a function of time.

In another embodiment of the present invention, an optical detector having a two dimensional array of pixels, such as a 2 x 2 array, a 5 x 5 array, a 10 x 10 array, of pixels is used as the low resolution detector 206. Corresponding *a priori* data about the expected detected signals based on knowledge of the position and shape of the sensitive region 102 relative to the illuminator 202 and the detectors is also used. These arrays may be included in larger arrays of pixels, such as a webcam or cell phone camera.

In a further embodiment of the present invention, the present invention includes a low resolution detector 206 detecting various portions of the illumination returned from corresponding sensitive regions 102 of the substrate, and each of the sensitive regions 102 has a detectable change in its respective characteristics of portions of illumination returned from the particular sensitive region 102 upon exposure of the particular sensitive region 102 to a corresponding analyte of interest to which the sensitive region 102 reacts. That is, the present invention could detect in a single assay the presence or absence of multiple analytes of interest which may be included in one or more samples deposited on the substrate 100 having multiple sensitive regions 102, each of which reacts to a corresponding one of the multiple analytes.

Once the low resolution detector 206 of the present invention detects the characteristics of the illumination returned from the substrate 100, the detected illumination is transmitted to a an analyzer, such as a processor 208. The present invention is explained with reference to a processor 208 as the analyzer, but the analyzer could also be a digital signal processor, a central processing unit, or simple electronic circuit..

Either the low resolution detector 206, the processor 208, or both, include *a priori* data about the sensitive region(s) 102 of the substrate 100. The *a priori* data includes information known about the sensitive region 102 prior to detection of the characteristics of the portion of illumination returned from the sensitive region 102.

This a *priori* data includes, for example, data corresponding to one or more of the location, and/or the shape and the size of the sensitive region(s) 102, and/or characteristics of the illumination returned from the sensitive region(s) including the detector output signals, the spectral intensity (color), the polarization, power, fluorescence, or the like, or combinations thereof. The detector output signals are proportional to the sum of the amount of the first portion of the illumination returned from the sensitive region 102 and the amount of the second portion of the illumination returned from the substrate outside the sensitive region 103. If the spectral intensity is included as a *priori* data, then a filter is placed in front of the detector detecting the spectral intensity in the low resolution detector 206. If polarization is included as a *priori* data, then a polarization sensitive element is placed in front of the detector in the low resolution detector 206. If fluorescence is included as *a priori* data, then a suitable filter is placed in front of the detector in the low resolution detector 206.

The processor 208 is in communication with the low resolution detector 206 and analyzes the characteristics of the illumination returned from the substrate and detected by the low resolution detector to determine whether the characteristics differ from each other, and, more particularly, whether a characteristic of a first portion of the illumination returned from the sensitive region differs from a characteristic of a second portion of the illumination returned from the substrate outside the sensitive region, based upon the a *priori* data about the sensitive region. If the characteristics differ from each other, then the processor 208 indicates that the sensitive area 102 was exposed to the analyte of interest.

Embodiments of the processor 208 analyzing characteristics of the illumination returned from the substrate include the processor 208 executing characteristic analysis functions embodied as procedures in computer software, or as a dedicated function in hardware such as a digital signal processor or an electronic circuit.

An example of a characteristic analysis function for a low resolution detector 206 comprising two detectors is now presented. In the following examples, the characteristic being analyzed is intensities of the portions of the returned illumination, but the present invention is not limited to the characteristic of intensity being analyzed. Returning now to the example of the characteristic analysis function for the low resolution detector 206 comprising two detectors, the characteristic analysis function receives as input a *priori* data including the intensities of the portions of the returned illumination, the location of the sensitive region 102 and the location of the substrate outside of the sensitive region 103, and determine whether there is a difference between the intensity of the first portion of the illumination returned from the sensitive region 102 and the intensity of the second portion of the illumination returned from the substrate outside the sensitive region 103. If a difference exists, then the processor 208 transmits a signal indicating that the sensitive region 102 was exposed to the analyte of interest. If there is no difference, or if there is a difference less than a threshold value, then the processor 206 transmits a signal indicating that the sensitive region 102 was not exposed to the analyte of interest.

This threshold value is included in the *a priori* data. Moreover, the *a priori* data in the 2-detector embodiment of the present invention indicates that one of the detectors of the low resolution detector 206 receives illumination mainly from the sensitive region 102, and the other of the detectors of the low resolution detector 206 receives illumination mainly from the substrate outside the sensitive region 103, and when the sensitive region 102 has been exposed to the analyte of interest, the relative intensities measured by the two detectors changes by more than the threshold value that is specified by the a *priori* data.

In the following example, the present invention codes the analyte of interest Y to which a given sensitive region 102 is sensitive in accordance with the shape X of the sensitive region 102 so that the present invention uses knowledge of the shape X as a *priori* data to determine whether the relative values of the detected characteristics of the portions of illumination returned from the substrate 100 are consistent with the shape X of the sensitive region 102, and thus, to determine that the sensitive region X was exposed to the analyte of interest Y The present invention does not need to determine the shape X itself.

An embodiment of the present invention also determines whether illumination returned from the substrate 100 and detected by low resolution detector 206 is consistent with a particular shape of a sensitive region 102 indicated by the a *priori* data. An example of a characteristic analysis function for a low resolution detector 206 comprising 3 detectors is to receive as input a *priori* data including the intensities of the portions of the returned illumination and the combination of the portions of the returned illumination, the location of the shape of the sensitive region 102 and the location of the substrate outside of the sensitive region 103, the location of the boundary, or edge, between the sensitive region 102 and the substrate outside of the sensitive region 103, and the locations of the detectors included in the low resolution detector 206. The characteristic analysis function then determines whether there is a difference between the intensity of the returned illumination of the first portion of the illumination returned from the sensitive region 102, the intensity of the returned illumination of the second portion of the illumination returned from the substrate outside the sensitive region 103, and the intensity of the returned illumination of a combination of the first portion and the second portion. The processor 208 then compares the intensities of the returned illumination received from the detectors and uses this comparison and the a *priori* data to determine whether the sensitive region 102 was exposed to the analyte of interest, and, if so, whether the intensities of the returned illumination are consistent with a particular shape of the sensitive region 102 exposed to the analyte of interest.

For example, if one of the detectors is located to receive illumination from the centroid of the shape, and another of the detectors is located such that the intensity of the returned illumination from the combination of the first portion of the illumination and the second portion of the illumination would be a detector value greater for a circular sensitive region 102 than a detector value for a triangular sensitive region 102, then this a *priori* data would be used by the processor to determine whether the sensitive region 102 were consistent with a circular shape or a triangular shape.

An example of a characteristic analysis function for low resolution detector 206 comprising a linear array of pixels and the substrate 100 moving relative to the low resolution detector 206 while the first portion of the illumination and the second portion of the illumination is being detected by the low resolution detector 206 is to receive as input a *priori* data, as a function of time or as a function of the location of the substrate 100 relative to the location of the low resolution detector 206, the location of the sensitive region 102, as well as the location of the sensitive region 102, the location of the substrate outside of the sensitive region 103, and the locations of the detectors of the low resolution detector 206. The processor then determines based upon a comparison of the characteristic of the first portion, the characteristic of the second portion, and the characteristic of the combination of the first portion and the second portion, whether the sensitive region 102 was exposed to the analyte of interest. If the shape of the sensitive region 102 is also included in the a *priori data,* then the processor 208 determines whether the characteristics are consistent with the shape of the sensitive region 102.

The foregoing embodiment of the characteristic analysis function would yield the same number of values detected by the low resolution detector 206 having a linear array of detectors with the substrate 100 moving relative to the low resolution detector 206 while the low resolution detector 206 is detecting the characteristics of the first portion, the second portion, and the combination of the first portion and the second portion, of the characteristics of illumination returned from the substrate, as a low resolution detector 206 having a larger, two dimensional array of pixels but without having the substrate 100 move relative to the low resolution detector 206 while the low resolution detector 206 is detecting the characteristics of the first portion, the second portion, and the combination of the first portion and the second portion.

That is, the linear array of detectors could be replaced by a single detector as long as the portions of returned illumination are detected at different positions of the substrate 100 as the substrate is moving.

In another embodiment of the characteristic analysis function, the present invention analyzes whether multiple sensitive regions were exposed to corresponding multiple analytes of interest, and in that embodiment, a *priori* data similar to the a *priori* data provided for a sensitive region is provided for all sensitive regions.

In addition, in an embodiment of the present invention, the foregoing characteristic analysis procedures also include analyzing threshold values to determine whether a difference between the values of the values returned by the detectors is large enough to indicate that the sensitive region 102 was exposed to the analyte of interest, without interference from background noise.

Other embodiments of the processor 208 analyzing the characteristics of the illumination returned from the substrate is for the processor to execute a statistical pattern recognition function known in the art, examples of which are discussed in "Statistical Pattern Recognition: A Review," Anil K. Jain, Robert P.W. Duin, and Jianchang Mao, IEEE Transactions on Pattern Analysis and Machine Intelligence, Vol. 22, No. 1, pp. 4 - 37, January 2000.

These statistical pattern recognition functions may include edge sharpening/finding techniques. The specific statistical pattern recognition functions which are embodied in, for example, computer software or firmware executed by a processor 208 or in a digital signal processor, the *a priori* data provided to these statistical pattern recognition functions vary according to the number of pixels included in the low resolution detector 206 and whether the substrate 100 is moving relative to the low resolution detector 206 while portions of illumination are returned from the substrate to the low resolution detector 206, and according to the shapes and the numbers of sensitive regions being analyzed and whether shapes of the sensitive regions are being determined.

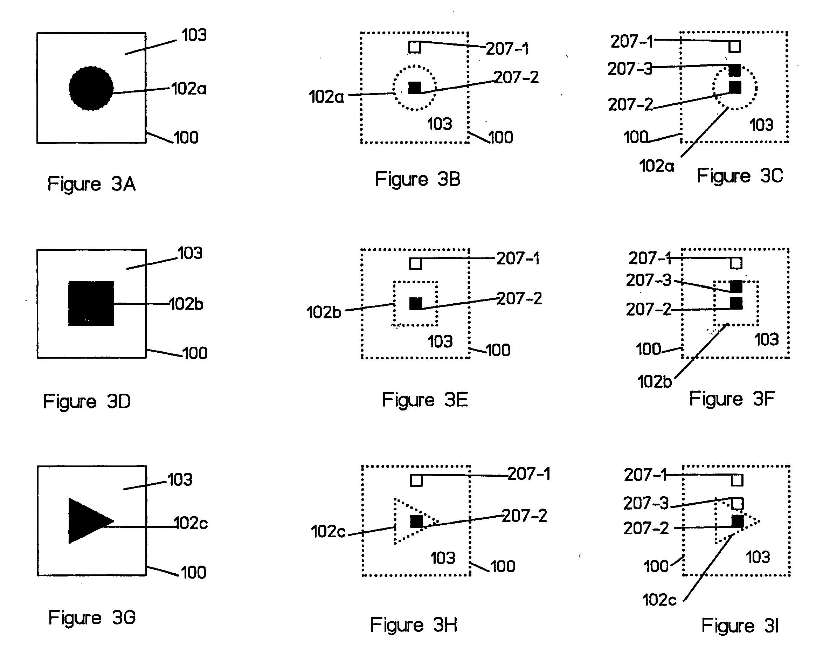

Figures 3A, 3B, 3C, 3E, 3F, 3G, 3H, and 31 are diagrams showing substrates and detector images, in accordance with the present invention. In an embodiment of the present invention, the detector images are pixel images, and thus a two detector image is a two pixel image and a three detector image is a three pixel image.

Figures 3A, 3B, 3C, 3D, 3E, 3F, 3G, 3H, and 3I demonstrate how the shape of the sensitive region 102 corresponds to the identity of the corresponding analyte of interest.

More particularly, Figures 3A, 3B, 3C, 3D, 3E, 3F, 3G, 3H, and 31 are diagrams of examples of different shapes of sensitive regions 102a, 102b, and 102c and substrate outside the sensitive regions 103 included on one or more substrates 100, and positioning of detectors 207 of low resolution detector 206 relative to the sensitive regions 102a, 102b, and 102c. These shapes of sensitive regions and positioning of detectors are by way of example, and the present invention is not limited to such shapes and placements.

As shown in Figure 3A, a sensitive region 102a of a substrate 100 has a circular shape and, upon exposure of the sensitive region 102a to the analyte, the sensitive region 102a darkens relative to the substrate outside the sensitive region 103. This darkening of the sensitive region 102a is an example of a characteristic of illumination returned from the sensitive region and detected by low resolution detector 206 of the present invention. Moreover, a position on the substrate 100 and a shape of the sensitive region 102a are examples of *a priori* data about the sensitive region 102a, used to determine the relative change in albedo to another part of the substrate 100.

Detectors 207 of the low resolution detector 206 are positioned relative to the substrate 100 so as to detect characteristics of illumination returned from the substrate 100. These positions of detectors 207 are shown in Figure 3B for detection of a two pixel image of the substrate 100.

As shown in Figure 3B, one of the detectors 207-1 is positioned to detect characteristics of illumination returned from the substrate outside the sensitive region 103, and another of the detectors 207-2 is positioned to detect characteristics of illumination returned from the sensitive region 102a. In the example shown above, the detector 207-2 is positioned to detect characteristics of illumination returned from the centroid of the sensitive region 102a.

With a two detector detection of the substrate detected by detectors 207-1 and 207-2, determination as to whether the characteristics of a first portion of the illumination returned from the sensitive region 102a is different than the characteristics of a second portion of the illumination returned from the substrate outside the sensitive region 103 is performed by the present invention, and, thus, the present invention determines whether the sensitive region 102a,was exposed to the analyte of interest included in sample.

That is, a difference between the signal level in detector 207-1 and the signal level in detector 207-2 indicates that the sensitive region 102a has been exposed to the analyte of interest.

Distinguishing between shapes of sensitive regions 102a, 102b, and 102c, by the present invention enables the present invention to distinguish which sensitive region(s) 102a, 102b, and 102c were exposed to corresponding analyte(s) of interest.

To determine a shape of sensitive region 102a, a third detector 207-3 of the low resolution detector 206 of the present invention is placed at a third position relative to the substrate 100, as shown in Figure 3C. In the example shown in Figure 3C, the third detector 207-3 is positioned to detect characteristics of illumination returned from a portion of the substrate 100 that is from the sensitive region 102a, and, thus, a three pixel image of the substrate 100.

The low resolution image apparatus 200 of the present invention thus detects a shape of the sensitive region 102a based upon a combination of the characteristic of the first portion of the illumination, the characteristic of the second portion of the illumination, and a characteristic of a combination of the first portion of the illumination and the second portion of the illumination. The characteristic of the combination is based upon the amount of the first portion of the illumination and the amount of the second portion of the illumination included in the combination. In the example of Figure 3C, the combination includes only the first portion since the third detector 207-3 is positioned to detect characteristics of illumination returned from the sensitive region 102.

Since detector 207-2 and detector 207-3 are positioned to detect the characteristics of the illumination returned from the sensitive region 102a, there would be no difference in these characteristics, such as, for example, signal level in detector 207-2 and 207-3. However, there would be a difference between the signal level in detector 207-1, and the signal level in detectors 207-2 and 207-3.

Figures 3F and 31 show additional examples in which the third detector 207-3 is positioned to receive from various locations on the substrate 100 combinations of the first portion of illumination and the second portion of the illumination returned from the sensitive region 102 and the substrate outside the sensitive region 103.

In the examples shown in Figures 3C, 3F, and 31, detectors 207-3 are placed such that the sum of the first portion of the illumination and the second portion of illumination received by the detectors is different for each of the examples, and, thus, the characteristic (such as signal strength) of the combinations of the first portion of the illumination and the second portion of the illumination is different for each of the examples.

Figures 3D, 3E, and 3F show examples of a sensitive region 102b patterned in a rectangular shape. Figure 3D shows sensitive region 102b subsequent to exposure to the analyte of interest. Figure 3E shows the positioning of two detectors 207-1 and 207-2 to determine whether the sensitive region 102b has been exposed to the analyte of interest, in a two detector image. Figure 3F shows the positioning of a third detector 207-3 at the edge between the sensitive region 102b and the substrate outside the sensitive region 103, to determine the shape of the sensitive region 102b. Since the detector 207-3 is positioned at the edge between the sensitive region 102b and the substrate outside the sensitive region 103, the signal level of the detector 207-3 would be greater than the signal level of detector 207-2 and less than the signal level in detector 207-1.

Figures 3G, 3H, and 31 show examples of a sensitive region 102c patterned in a triangular shape. Figure 3G shows sensitive region 102c subsequent to exposure to the analyte of interest. Figure 3H shows the positioning of two detectors 207-1 and 207-2 to determine whether the sensitive region 102c has been exposed to the analyte of interest, in a two pixel image. Figure 31 shows the positioning of a third detector 207-3 in the substrate outside the sensitive region 103, to determine the shape of the sensitive region 102c, in a three pixel image. Since the detector 207-3 is positioned in the substrate outside the sensitive region 103, the signal level of the detector 207-3 would be nearly the same as the signal level of the detector 207-1.

Thus, two detectors 207-1 and 207-2 can detect the presence of a sensitive region exposed to an analyte of interest, and three detectors 207-1, 207-2, and 207-3 can distinguish between shapes of sensitive regions. For any detector array, there will be a set of shapes that can be easily distinguished and a set that cannot be easily distinguished.

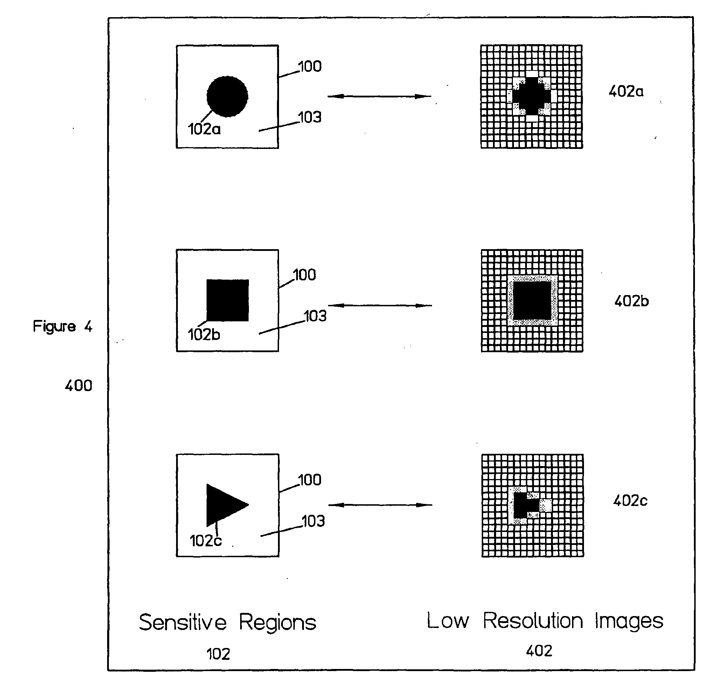

Figure 4 is a diagram showing sensitive regions 102a, 102b, and 102c exposed to samples having an analyte of interest, and corresponding low resolution images 402a, 402b, and 402c generated by a low resolution detector 206 having a 2-dimensional array of pixels, of the present invention. The gray scale in the low resolution images 402a, 402b, and 402c indicates the signal level in a pixel (the lighter the gray scale, the more intense the signal) detecting characteristics of illumination returned from the sensitive region (dark pixel), the substrate outside the sensitive region 103 (light pixel), and an edge between the sensitive region and the substrate outside the sensitive region 103 (pixel intermediate between the light pixel and the dark pixel). However, the sensitive region 102 could be lighter or darker than the substrate outside the sensitive region 103 upon exposure to the analyte of interest.

More particularly, as shown in Figure 4, sensitive region 102a, upon exposure to the sample including the analyte of interest, darkens relative to substrate outside the sensitive region 103, and is circular in shape. Low resolution image 402a, also circular in shape, corresponds to sensitive region 102a. Likewise, sensitive region 102b exposed to the analyte of interest and its corresponding low resolution image 402b are both rectangular in shape. In addition, sensitive region 102c exposed to the anlayte of interest and its corresponding low resolution image 402c are both triangular in shape.

It can be seen that the exemplary shapes of the sensitive regions can be distinguished even with the very low resolution of the detector shown.

Pixels located on the edges of low resolution images 402a, 402b, and 402c have values intermediate between those of pixels located completely within sensitive regions 102a, 102b, and 102c, respectively and those of pixels located in substrate outside the sensitive region 103.

Each of low resolution images 402a, 402b, and 402c is shown on an array of pixels. As the number of pixels in the array increases, the resolution of the array increases. Edges of low resolution images 402a, 402b, and 402c are shown as gray scale, the intensity of which corresponds to the signal level of a pixel in the image taken by the imaging array 206 of sample 102a, 102b, and 102c, respectively. Therefore, processor 208 executes the above-mentioned characteristic analysis functions or known statistical pattern recognition procedures in response to the a *priori* data to determine the centroid and to define edges of low resolution images 402a, 402b, and 402c, and thus to determine whether low resolution images 402a, 402b, and 402c correspond to sensitive regions 102a, 102b, and 102c exposed to analytes of interest, respectively.

In an embodiment of the present invention, since the sensitive regions of different shapes (circle 102a, square 102b, and triangle 102c, for example) are deposited at different locations on a substrate, then multiple, differing analytes of interest which may be included in a sample or samples are detected either in parallel or sequentially. That is, multiple sensitive regions of different shapes and locations are deposited on a substrate, and data indicating these shapes and locations are included in *a priori* data. The low resolution imaging apparatus 200 of the present invention is used to detect multiple, different analytes in a single assay. The present invention then uses statistical pattern recognition, to separate the detected analytes of interest, once an array of detectors read out sequentially yields a sequential version of a spatial signal.

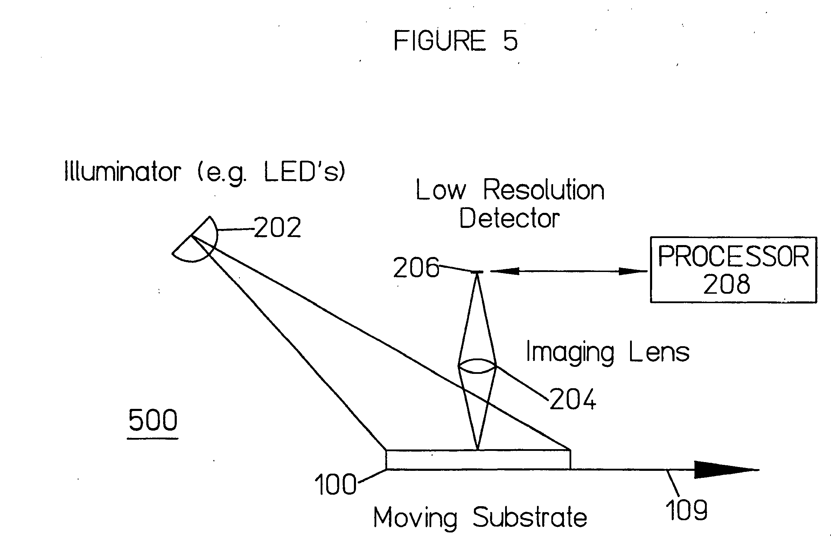

Figure 5 is a diagram showing a low resolution imaging apparatus 500 for reading an assay of a sample deposited on a substrate 100 having a sensitive region 102, to determine whether an analyte of interest was included in the sample. In the low resolution imaging apparatus 500 of Figure 5, low resolution detector 206 is a linear imaging array of pixels. That is, low resolution detector 206 is a 1-dimensional imaging array, and may also be a CMOS-based imaging array.

As shown in Figure 5, the illuminator 202 illuminates a moving sample as the sample is moved with respect to the low resolution detector 206 by a mover 109. The low resolution detector 206, as a linear imaging array, reads images either as a function of time or as a function of position, virhich is a second dimension of the low resolution image detected by the low resolution detector 206. Typically, a linear imaging array is less expensive than an area (or 2-dimensional) imaging array.

Processor 208 then executes pattern recognition functions discussed herein above to determine edges and shapes of sensitive regions 102 moving linearly through the field of view of the low resolution detector 206. This pattern recognition software traces the perimeter of an already-known shape using the a *priori* data about the shape and location of a sensitive region 102. This pattern recognition software may also reconstruct the image of the sensitive region 102 exposed to the analyte of interest.

Alternatively, at least 3 detections can be used to distinguish between shapes of sensitive areas 102 without necessarily determining the shape of the sensitive region 102.

The low resolution imaging apparatus 500 of the present invention detects sensitive regions 102 sensitive to various analytes differently. These sensitive regions 102 have various shapes. The low resolution imaging apparatus 500 of the present invention then uses statistical pattern recognition, as discussed herein above, to separate the detected results for different analyses. In an embodiment of the present invention, the low resolution detector 206 is an array of detectors read out sequentially to yield a spatial signal.

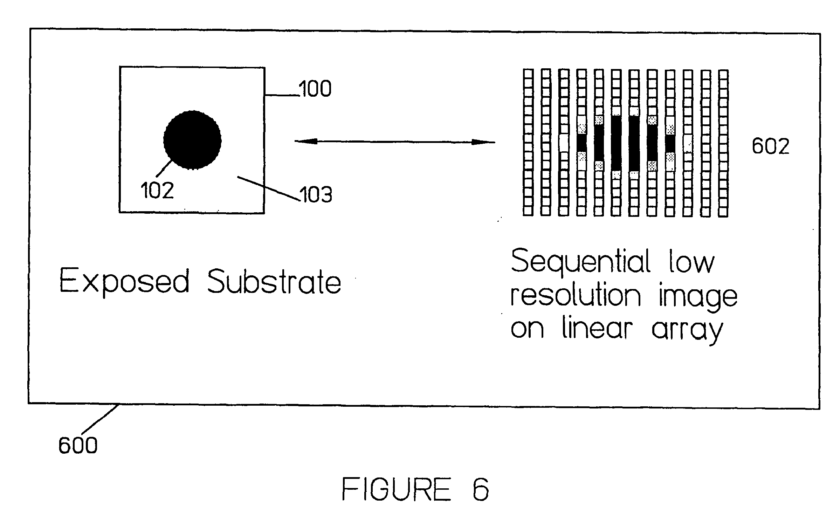

Figure 6 is a diagram 600 showing a relationship between a sensitive region 102 exposed to a sample having an analyte of interest, and a corresponding time dependent or position dependent sequential low resolution image 602 obtained by a low resolution detector 206 of the low resolution imaging apparatus 500 of the present invention. The low resolution detector 206 which detected the image 602 is a linear array. The gray scale in the low resolution image indicates the signal level in a pixel (the lighter the gray scale, the more intense the signal).

The sensitive region 102 and the low resolution image 602 shown in Figure 6 are shown as a circular shape, but the present invention is not limited to such a circular shape. In addition, multiple sensitive regions 102 having respective shapes and corresponding to respective analytes of interest may be included on substrate 100.

The low resolution image 602 is shown on a array of pixels. As the number of pixels in the array increases, the resolution of the array increases. Edges of low resolution image 602 are shown as gray scale, the intensity of which corresponds to the signal level of a pixel in the image taken by the imaging array 506 of moving sample. Therefore, processor 208 executes the above-mentioned characteristic analysis functions or known pattern recognition procedures to determine the centroid and to define edges of low resolution image 602, and thus to determine whether low resolution image 602 corresponds to a sensitive region 102 exposed to an analyte of interest in a sample moving relative to the low resolution detector 206 by mover 109.

In the low resolution imaging apparatus 500 of the present invention, the rate at which the sensitive region 102 is moving relative to the low resolution detector 206 and the position of the sensitive region on the substrate 100 are known, and are included in the a *priori* data.

In low resolution imaging apparatus 500, since exposed samples, and thus sensitive regions, of different shapes (circle, square, and triangle, for example) may be located at different locations on a substrate, then multiple, differing analytes may be detected in a single assay. That is, multiple sensitive areas of different shapes and sensitive to respective analytes of interest may be located on a substrate, and these shapes and the locations of the shapes may be included in *a priori* data, and used by the low resolution imaging system 500 of the present invention to detect multiple, different analytes of interest in a single assay. These multiple, different analytes of interest may be included in a single sample or in multiple samples.

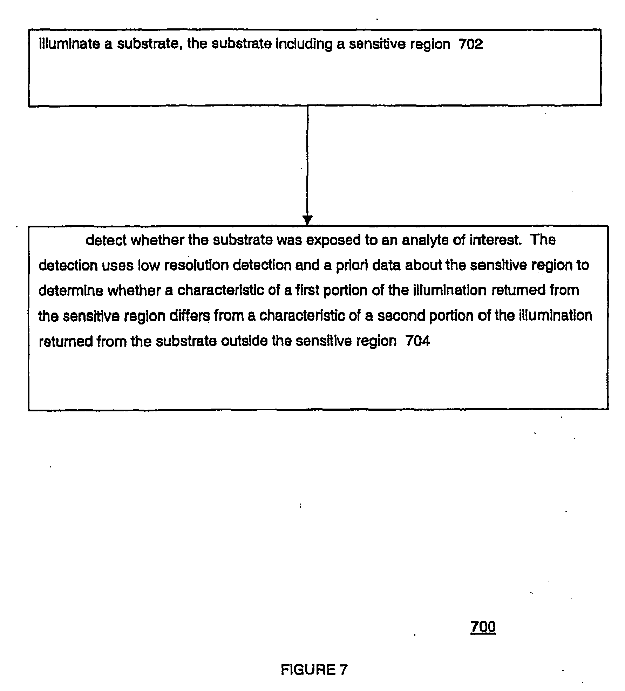

Figure 7 is a flowchart of a method 700 of reading an assay of a substrate exposed to an analyte using low resolution imaging, according to the present invention. The method 700 is executed by the low resolution imaging apparatus 200 or 500 of the present invention.

At 702, the method 700 of the present invention illuminates a substrate. Then at 704, the method 700 detects whether the substrate was exposed to an analyte of interest. The detection uses low resolution detection and a *priori* data about a sensitive region of the substrate to determine whether a characteristic of a first portion of the illumination returned from the sensitive region differs from a characteristic of a second portion of the illumination returned from the substrate outside the sensitive region.

An embodiment of the method 700 also detects a shape of the sensitive region based upon a combination of the characteristic of the first portion of the illumination, the characteristic of the second portion of the illumination, and a characteristic of a combination of the first portion of the illumination and the second portion of the illumination.

In an embodiment of the method 700, the present invention detects these characteristics either sequentially over time by moving the sensitive region relative to the low resolution detector, or in parallel with each other.

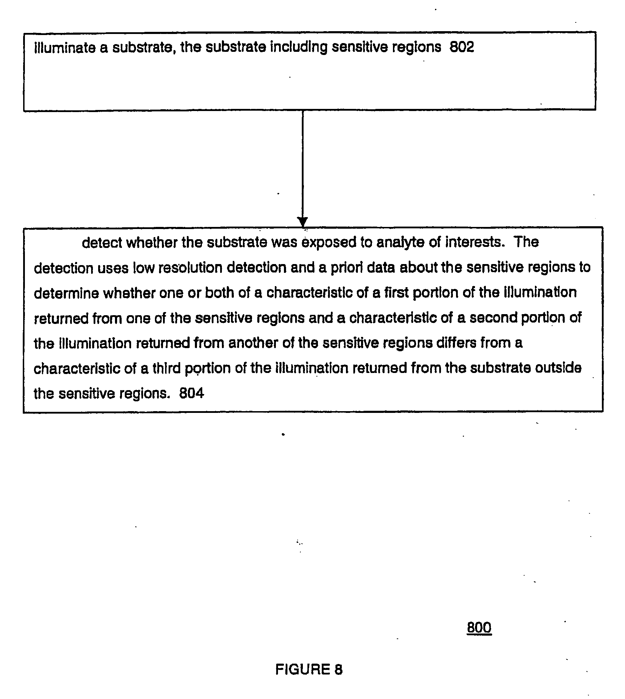

Figure 8 shows another method 800 of reading an assay of the present invention. At 802, the method 800 of the present invention illuminates a substrate, the substrate comprising sensitive regions. Then, at 804, the method 800 detects whether the substrate was exposed to analytes of interest. The detection uses low resolution detection and a *priori* data about the sensitive regions to determine whether one of both of a characteristic of a first portion of the illumination returned from one of the sensitive regions and a characteristic of a second portion of the illumination returned from another of the sensitive regions differs from a characteristic of a third portion of the illumination returned from the substrate outside the sensitive region.

The method 800 of the present invention detects these characteristics either sequentially over time or by position, by moving the sensitive region relative to the low resolution detector, or in parallel with each other.

An embodiment of the method 800 moves the substrate relative to the low resolution detector and the detecting further comprising detecting the first portion, the second portion, and the third portion sequentially with each other as the sensitive regions are moving relative to the low resolution detector.

An embodiment of the method 800 detects respective characteristics of portions of the illumination returned from the substrate to determine the analytes of interest coded for different, respective shapes of the sensitive regions.

An embodiment of the methods 700 and 800 of the present invention also determine whether the sensitive region 102 was exposed to the analyte of interest based upon whether an image corresponding to the sensitive region is detected.

In embodiments of methods 700 and 800, the low resolution detection determines whether a detected shape corresponds to the shape, defined by the a *priori* data, of the sensitive region exposed to the analyte of interest.

In an embodiment of the method 800, the a *priori* data includes data corresponding to multiple sensitive regions 102, the sensitive regions 1 02 have respective shapes and locations different from each other, and are sensitive to different analytes of interest. An embodiment of the method 800 further comprises determining whether multiple analytes of interest are present in the sample(s) deposited on the substrate 100, based upon the a *priori* data.

In an embodiment of the method 700, the low resolution image is a 2-dimensional image, and the low resolution detection involves reading an image of the substrate 100 while the substrate 100 is stationary.

The present invention does not require the use of a sophisticated detector (either human or machine). The present invention uses a relatively low resolution, low cost detector. Examples of a low resolution detector of the present invention include two or more detectors, a one dimensional or two dimensional CMOS sensor having relatively few pixels per dimension, for example 50 pixels per dimension, a low resolution CMOS detector such as used in a webcam (web camera), optical mouse, or cellular telephone camera, instead of relatively more expensive and relatively higher resolution charge coupled device (CCD) detectors and CMOS detectors, to perform low resolution detection of the substrate after exposure to an sample. The present invention may also use the above-mentioned characteristic analysis functions, or software pattern recognition techniques known in the art (e.g., edge sharpening/finding), to detect the presence or absence of a shape defined by the a *priori* data.

The present invention reads an assay using low resolution detectors and does not need a high resolution imaging detector since the present invention makes use of a *priori* data (information known in advance of image detection) to determine whether an exposed sensitive region is present at a known location of a substrate, rather than attempting to identify what is present on the substrate.

The present invention can use low resolution detectors since the present invention also makes use of conventional edge-finding functions executed by a processor to determine whether a feature having a particular shape is present at an expected location on a substrate. These conventional edge-finding functions determine whether there are edges in images and the degree of confidence that the edges are detected, since it is known a *priori* where the edge is located.

Advantageously, in the present invention, the detection performed by the computational engine (the processor) is predictable and consistent, unlike human detection. That is, if the present invention determines that the confidence in the detection meets a threshold level, and consequently, the sample was exposed to the corresponding analyte.

In addition, in the present invention, more than one analyte of interest can be detected in a single assay. Each sensitive region can be patterned on the substrate differently, so that the low resolution detection of the present invention detects the presence or absence of a particular shape at a particular location of the substrate using the a *priori* data. Moreover, the analyte of interest is coded for a shape of the sensitive region 102 on the substrate, and the present invention distinguishes between shapes of sensitive regions 102 to determine whether the substrate 100 was exposed to a particular analyte of interest.

In the present invention, sensitive regions sensitive to various analytes are set out in different shapes and at different locations. The present invention uses pattern recognition to provide individual detection for each analyte of interest. A low resolution detector of the present invention uses a one dimensional array of detectors, to detect line images to read out sequentially to yield a temporal version of the spatial signal.

Industrial uses for the present invention include chemical or biological detection, and substance abuse detection.

The many features and advantages of the invention are apparent from the detailed specification, and, thus, it is intended by the appended claims to cover all such features and advantages of the invention that fall within the scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. A method (700) of reading an assay, the method comprising:
illuminating (702) a substrate (100), the substrate comprising a sensitive region (102); and
detecting (704) whether the substrate (100) was exposed to an analyte of interest, the detecting comprising using low resolution detection (200) and a *priori* data about the sensitive region (102) to determine whether a characteristic of a first portion of the illumination returned from the sensitive region (102) differs from a characteristic of a second portion of the illumination returned from the substrate outside the sensitive region (103).

2. The method of claim 1, further comprising:
detecting a shape (102) of the sensitive region (102) based upon a combination of the characteristic of the first portion of the illumination, the characteristic of the second portion of the illumination, and a characteristic of a combination of the first portion of the illumination and the second portion of the illumination.

3. The method of claim 2, further comprising:
detecting signal level in a first pixel to determine the characteristic of the first portion (207-1),
detecting signal level in a second pixel to determine the characteristic of the second portion (207-2), and
detecting signal level in a third pixel to determine the characteristic of the combination of the first portion and the second portion (207-3).

4. The method of claim 2, further comprising:
detecting spectral intensity to determine the characteristic of the first portion (207-1), detecting spectral intensity to determine the characteristic of the second portion (207-2), and
detecting spectral intensity to determine the characteristic of the combination of the first portion and the second portion (207-3).

5. The method of claim 2, further comprising:
moving (109) the substrate (100), and
sequentially detecting (500) the first portion of the illumination, the second portion of the illumination, and the combination of the first portion of the illumination and the second portion of the illumination during the moving (109).

6. The method of claim 2, further comprising:
detecting (200) the first portion of the illumination, the second portion of the illumination, and the combination of the first portion of the illumination and the second portion of the illumination in parallel (206).

7. The method of claim 1, further comprising:
detecting signal level in a first pixel to determine the characteristic of the first portion (207-1), and
detecting signal level in a second pixel to determine the characteristic of the second portion (207-2).

8. The method of claim 1, further comprising:
detecting filtered signal level to determine the characteristic of the first portion (207-1), and
detecting filtered signal level to determine the characteristic of the second portion (207-2).

9. The method of claim 1, further comprising:
moving (109) the substrate (100), and
sequentially detecting (500) the first portion of the illumination and the second portion of the illumination during the moving (109).

10. The method of claim 1, further comprising:
detecting the first portion of the illumination and the second portion of the illumination in parallel (206).
